# FASCICULE DE BREVET EUROPEEN

(11) **EP 3 479 922 B1**
(45) Date de publication et mention de la délivrance du brevet: **29.04.2020**
(21) Numéro de dépôt: 18204126.9
(22) Date de dépôt: 02.11.2018
(51) Int. Cl.: B21D 43/13, B23Q 1/66, B65G 47/64, B65G 1/07, B65G 1/06, B23K 37/02, B66F 3/46

(54) **DISPOSITIF DE SUPPORT ET DE POSITIONNEMENT DE TABLES NAVETTES, ET PROCEDE DE COMMANDE D'UN TEL DISPOSITIF**
HALTE- UND POSITIONIERUNGSVORRICHTUNG FÜR WECHSELTISCHE, UND STEUERVERFAHREN EINER SOLCHEN VORRICHTUNG
DEVICE FOR SUPPORTING AND POSITIONING SHUTTLE TABLES, AND METHOD FOR CONTROLLING SUCH A DEVICE

(30) Priorité: 07.11.2017 FR 1760441
(43) Date de publication de la demande: 08.05.2019
(73) Titulaire: Amada Europe, 93290 Tremblay-de-France (FR)
(72) Inventeur: ROGARD, David, 08000 CHARLEVILLE-MEZIERES (FR); GRAFTEAUX, Pascal, 08090 HAM LES MOINES (FR)
(74) Mandataire: Cabinet Beau de Loménie

(56) Documents cités:
- EP-A1- 2 106 865
- CN-A- 102 284 952
- CN-B- 102 218 601
- CN-B- 103 659 005
- CN-U- 201 889 591

## Description

Le présent exposé concerne un dispositif de support et de positionnement de tables navettes dans une installation de traitement de pièces, comprenant au moins trois colonnes de support comportant respectivement des premier, deuxième et troisième taquets aptes, chacun, à être déplacés par un actionneur respectif, les taquets portant un châssis qui définit un premier et un deuxième plan horizontal de support pour, respectivement, une première et une deuxième table navette destinées à porter au moins une pièce à traiter dans l'installation, le dispositif comportant une unité de commande configurée pour commander les actionneurs de manière à déplacer les taquets entre au moins une position haute et une position basse dans lesquelles l'un ou l'autre des premier et deuxième plans horizontaux de support est placé à un niveau de traitement prédéterminé.

Par exemple, les pièces traitées dans l'installation peuvent être des tôles, l'opération de traitement pouvant consister en un emboutissage, une découpe ou un marquage, en particulier au laser.

Classiquement, pour que l'installation puisse fonctionner en temps masqué, le dispositif de support et de positionnement porte deux tables navettes placées l'une au-dessus de l'autre. Par un déplacement vertical, l'une ou l'autre des deux tables peut ainsi être placée au niveau de traitement de l'installation et la table placée au niveau de traitement peut être déplacée en translation horizontale pour entrer dans une unité de traitement afin que la pièce qu'elle porte subisse un traitement, et en sortir après ce traitement. Pendant ce temps de traitement, la table navette restée en dehors de l'unité de traitement peut être déchargée de la pièce qu'elle portait et qui vient de subir un traitement, et chargée avec une nouvelle pièce devant subir un traitement.

Les documents CN-B-103659005 et CN-U-20188959 divulguent des dispositifs connus de levage de tables navettes. On comprend qu'il est important de définir avec précision la position haute et la position basse. Il est également important de permettre que le passage de l'une à l'autre de ces deux positions puisse être effectué rapidement, de manière compatible avec la cadence de traitement. Par ailleurs, il convient que chaque table navette soit parfaitement horizontale pour pouvoir effectuer le déplacement horizontal en va-et-vient dans l'unité de traitement de manière très rapide, également compatible avec les cadences de traitement souhaitées.

Dans les dispositifs connus, les colonnes de support comprennent une butée inférieure et une butée supérieure, et les venues en butée des taquets avec ces butées inférieure et supérieure définissent respectivement la position basse et la position haute. Lors de la mise en service du dispositif, il importe de régler avec précision les hauteurs de ces butées pour qu'elles définissent des plans horizontaux, c'est-à-dire qu'elles aient précisément les mêmes niveaux sur chacune des trois colonnes. Par ailleurs, les venues en butée en position haute et basse peuvent occasionner des chocs qui, après un grand nombre d'utilisations, peuvent provoquer des usures ou de légers déplacements des butées, de sorte qu'il convient de régulièrement vérifier le réglage. Enfin, des composants peuvent subir une certaine fatigue, dans la mesure où l'énergisation des actionneurs n'est pas nécessairement arrêtée lorsque les taquets arrivent en butée. En particulier, les actionneurs peuvent être des vérins hydrauliques mus par du fluide sous pression, et le dispositif peut être sujet à des fuites en raison des élévations importantes de la pression du fluide occasionnées par les venues en butée des taquets.

Le présent exposé vise à améliorer cette situation en remédiant substantiellement aux inconvénients précités.

Ainsi, le présent exposé concerne un dispositif de support et de positionnement de tables navettes dans une installation de traitement de pièces, comprenant au moins trois colonnes de support comportant respectivement des premier, deuxième et troisième taquets aptes, chacun, à être déplacés par un actionneur respectif, les taquets portant un châssis qui définit un premier et un deuxième plan horizontal de support pour, respectivement, une première et une deuxième table navette destinées à porter au moins une pièce à traiter dans l'installation, le dispositif comportant une unité de commande configurée pour commander les actionneurs de manière à déplacer les taquets entre au moins une position haute et une position basse dans lesquelles l'un ou l'autre des premier et deuxième plans horizontaux de support est placé à un niveau de traitement prédéterminé, dispositif dans lequel l'unité de commande est apte à établir une consigne de déplacement et à commander chaque actionneur selon ladite consigne de déplacement en commandant les actionneurs selon un asservissement maître-esclave en émettant une consigne de déplacement pour l'actionneur du premier taquet qui est un actionneur maître, dont les autres actionneurs sont esclaves, en particulier selon un asservissement en boucle fermée.

Ainsi, selon le présent exposé, l'unité de commande établit une consigne de déplacement, qui sert à la commande de chaque actionneur. D'une part, il n'est plus nécessaire de procéder au fastidieux réglage des positions haute et basse par des butées mécaniques, puisque ces positions sont définies selon la consigne de déplacement. D'autre part, lors de la mise en service du dispositif, les différents actionneurs peuvent être mis en œuvre pour définir une position de référence des taquets dans laquelle ces taquets définissent un même plan horizontal. Les actionneurs peuvent ensuite être commandés pour déplacer les taquets entre les positions haute et basse de telle sorte que les taquets soient à tout moment situés au même niveau horizontal.

De plus, l'asservissement maître-esclave facilite encore la mise en place de l'installation. En effet, lors de cette mise en place, il convient de très précisément définir la position haute et la position basse du premier taquet, déplacé par l'actionneur maître, les positions des autres taquets pouvant en découler naturellement puisque les actionneurs qui servent à les déplacer sont des actionneurs esclaves.

Optionnellement, l'asservissement est en boucle fermée ; il est alors particulièrement rapide et précis.

Optionnellement, le dispositif comprend en outre une quatrième colonne de support comportant un quatrième taquet apte à être déplacé par un actionneur respectif, le châssis comprenant un premier longeron qui s'étend entre le premier et le troisième taquet et un deuxième longeron qui s'étend entre le deuxième et le quatrième taquet.

Même si la présence de trois colonnes de support dont les taquets respectifs servent à définir un plan peut être suffisante, il peut être intéressant d'en avoir quatre et de faire en sorte que le châssis comprenne des longerons qui, avantageusement, s'étendent dans la direction de déplacement horizontale des tables navettes lors de leur va-et-vient d'entrée et de sortie par rapport à l'unité de traitement.

Optionnellement, les actionneurs du deuxième et du troisième taquet sont asservis en esclaves sur l'actionneur du premier taquet, et l'actionneur du quatrième taquet est asservi en esclave sur l'actionneur du deuxième taquet ou sur l'actionneur du troisième taquet.

Optionnellement, chaque taquet est associé à un détecteur associé respectif, apte à détecter un paramètre représentatif de la position du taquet associé, et la consigne de déplacement comprend la consigne d'opérer un déplacement de chaque taquet jusqu'à ce qu'une valeur cible pour ledit paramètre représentatif de la position du taquet considéré soit atteinte.

Optionnellement, le détecteur associé au premier taquet est un détecteur de position configuré pour détecter la position en hauteur du premier taquet et la consigne de déplacement comprend la consigne d'opérer un déplacement du premier taquet jusqu'à ce qu'une hauteur donnée, repérée par le premier détecteur de position, soit atteinte.

Optionnellement, le détecteur associé à chaque taquet est un détecteur de position configuré pour détecter la position en hauteur du taquet associé et la consigne de déplacement est une consigne indépendante pour chaque taquet.

Optionnellement, les déplacements du deuxième et du troisième taquet sont asservis sur celui du premier taquet et corrigés par des données de correction, issues des valeurs des paramètres représentatifs des positions des deuxième et troisième taquets, détectées par les détecteurs respectivement associés au deuxième et au troisième taquet.

Optionnellement, le détecteur associé au deuxième taquet est un détecteur de position configuré pour détecter la position en hauteur du deuxième taquet, tandis que le détecteur associé au troisième taquet est un détecteur d'inclinaison, configuré pour détecter l'inclinaison d'un segment du châssis qui s'étend entre le troisième taquet et l'un des premier et deuxième taquets.

Optionnellement, le détecteur associé au deuxième taquet est un détecteur d'inclinaison configuré pour détecter l'inclinaison d'un segment du châssis qui s'étend entre le premier et le deuxième taquet, et le détecteur associé au troisième taquet est un détecteur d'inclinaison, configuré pour détecter l'inclinaison d'un segment du châssis qui s'étend entre le troisième taquet et au moins l'un des premier et deuxième taquets.

Optionnellement, dans le cas mentionné précédemment où le châssis comprend un premier et un deuxième longeron, le détecteur associé au troisième taquet est un détecteur d'inclinaison, configuré pour détecter l'inclinaison du premier longeron, et le détecteur associé au quatrième taquet est un détecteur d'inclinaison, configuré pour détecter l'inclinaison du deuxième longeron.

Optionnellement, les actionneurs comprennent des moteurs électriques, en particulier des moteurs électriques asynchrones.

Selon les différentes options énoncées ci-dessus, les taquets des colonnes respectives peuvent être déplacés très rapidement jusqu'à obtenir avec précision la position souhaitée, tout en maintenant à tout moment les tables navettes dans des plans. De plus, les boucles d'exécution des commandes des actionneurs peuvent être très rapides. En outre, les déplacements peuvent être très rapides, notamment lorsque les actionneurs comprennent des moteurs électriques.

Le présent exposé concerne également un procédé de commande d'un dispositif de support et de positionnement de tables navettes dans une installation de traitement de pièces, le dispositif comprenant au moins trois colonnes de support comportant respectivement des premier, deuxième et troisième taquets aptes, chacun, à être déplacés par un actionneur respectif, les taquets portant un châssis qui définit un premier et un deuxième plan horizontal de support pour, respectivement, une première et une deuxième table navette destinées à porter au moins une pièce à traiter dans l'installation, procédé selon lequel on commande les actionneurs de manière à déplacer les taquets entre au moins une position haute et une position basse dans lesquelles l'un ou l'autre des premier et deuxième plans horizontaux de support est placé à un niveau de traitement prédéterminé, et selon lequel on établit une consigne de déplacement et on commande chaque actionneur selon ladite consigne de déplacement en commandant les actionneurs selon un asservissement maître-esclave, selon une consigne de déplacement maître pour l'actionneur du premier taquet, qui est un actionneur maître, et des consignes de déplacement esclaves pour les autres actionneurs, qui sont des actionneurs esclaves.

Selon ce procédé, il n'est pas nécessaire de procéder à des réglages mécaniques compliqués lors de la mise en service de l'installation, puisque les déplacements des différents taquets sont gérés par leurs actionneurs et l'unité de commande, selon des consignes. La consigne initiale peut donc être élaborée pour placer les taquets au même niveau horizontal de référence, qui peut être ou non l'une des positions haute et basse, et la consigne de déplacement fera ensuite passer les taquets entre l'une et l'autre des positions haute et basse.

Bien entendu, ce procédé s'applique à un dispositif selon le présent exposé, comprenant quatre colonnes, comme décrit précédemment.

Optionnellement, on commande les actionneurs esclaves en boucle fermée.

Optionnellement, pour chaque taquet, on détecte un paramètre représentatif de la position du taquet considéré, et on opère un déplacement de chaque taquet jusqu'à ce qu'une valeur cible donnée, pour ledit paramètre représentatif de la position du taquet considéré soit atteinte.

Optionnellement, le paramètre représentatif de la position du premier taquet est la position en hauteur dudit premier taquet.

Optionnellement, le paramètre représentatif de la position du troisième taquet est l'inclinaison d'un segment du châssis qui s'étend entre le troisième taquet et au moins l'un des premiers et deuxième taquets.

Optionnellement, à l'occasion d'un déplacement des taquets visant à placer l'un des premier et deuxième plans horizontaux de support au niveau de traitement prédéterminé, on commande un déplacement horizontal vers une zone de traitement de la table navette située sur ledit un des premier et deuxième plans horizontaux de support, avant que ledit un des premier et deuxième plans horizontaux de support n'ait atteint ledit niveau de traitement prédéterminé.

Le présent exposé sera bien compris et ses avantages apparaitront mieux à la lecture de la description détaillée qui suit, d'un mode de réalisation représenté à titre d'exemple et non limitatif. La description se réfère aux dessins annexés sur lesquels :
- la figure 1 est une vue schématique en élévation montrant une installation de traitement de pièces comprenant un dispositif de support et de positionnement de tables navettes selon le présent exposé, dans une première configuration ;
- la figure 2 est une vue analogue à la figure 1, montrant le dispositif de support et de positionnement de tables navettes dans une deuxième configuration ;
- la figure 3 est une vue en perspective d'un dispositif de support et de positionnement de tables navettes selon le présent exposé ;
- la figure 4 est une vue en bout, selon la flèche IV de la figure 3 ;
- la figure 5 est une vue en perspective partiellement éclatée, montrant une colonne de support du dispositif des figures 3 et 4 ; et
- les figures 6A et 6B sont deux exemples de schémas d'asservissement des actionneurs respectifs des différentes colonnes de support du dispositif.

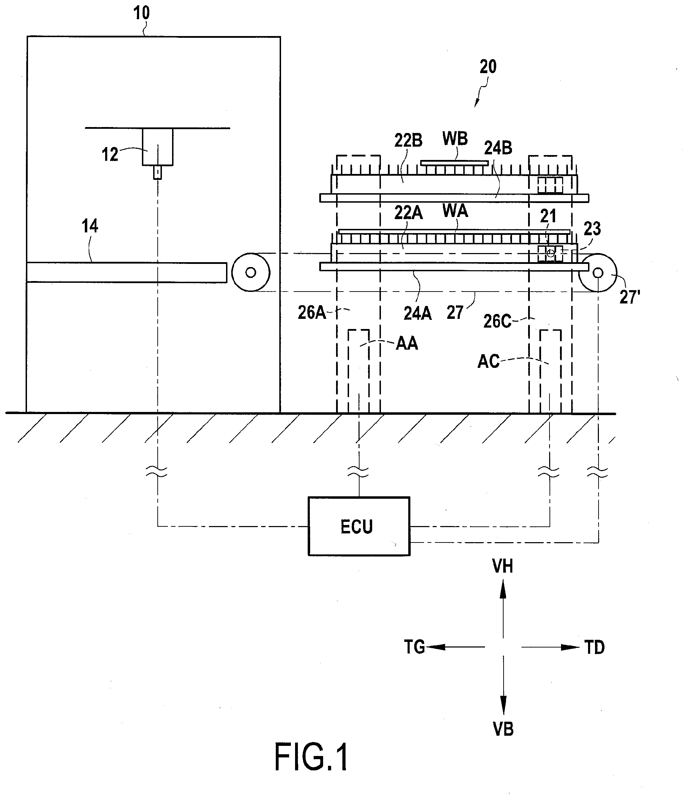

La figure 1 montre une installation de traitement de pièces comprenant une unité de traitement 10 équipée d'un outil de traitement tel qu'une tête de découpe laser 12 pouvant être commandée, en ce qui concerne son déplacement et en ce qui concerne l'émission de son faisceau de découpe, par une unité de commande ECU afin de découper une pièce portée par un plan de traitement 14 situé dans l'unité de traitement 10. L'installation comprend en outre un dispositif 20 de support et de positionnement de tables navettes 22A, 22B supportant chacune une pièce, respectivement WA, WB, en vue du traitement de ces pièces dans l'unité 10. En l'espèce, chaque support mobile est porté par un rail ou analogue, respectivement 24A, 24B. Chacune des tables navettes peut ainsi être déplacée en translation longitudinale selon les flèches TG et TD le long du rail qui la supporte, entre une position de traitement, dans laquelle la table navette est portée par le plan de traitement 14 dans l'unité de traitement 10 afin que la pièce qu'elle porte puisse subir le traitement, et une position de dégagement dans laquelle la table navette est en dehors de l'unité de traitement 10 pour permettre le chargement ou le déchargement de la pièce.

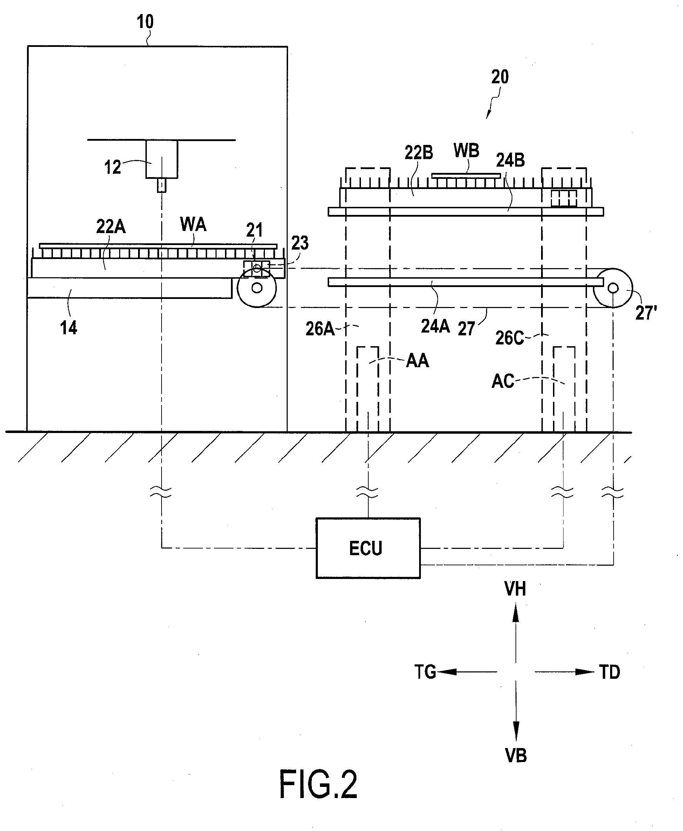

Sur la figure 1, les deux tables navettes 22A et 22B sont représentées dans la position de dégagement. Dans cette position, les tables peuvent être déplacées verticalement selon les flèches VH et VB, entre un niveau de traitement (qui est le niveau horizontal défini par le plan de traitement 14) et un niveau de chargement/déchargement. Les tables navettes sont portées par des colonnes de supports via des taquets déplaçables le long de ces colonnes par des actionneurs. Sur les figures 1 et 2, on voit deux de ces colonnes 26A et 26C, et leurs deux actionneurs associés, respectivement AA et AC. Comme on le verra dans la suite, l'unité de commande ECU est configurée pour commander les actionneurs de déplacement vertical selon une consigne de déplacement.

L'unité de commande ECU est en particulier une unité électronique de commande. Bien entendu, l'unité de commande commandant les actionneurs peut-être une unité de commande dédiée ou bien une partie dédiée d'une unité de commande générale de l'installation, ayant également une partie qui commande les déplacements horizontaux des tables navettes et/ou l'activation et le déplacement de l'outil 12.

Ainsi, les tables navettes peuvent être alternativement placées au niveau de traitement et au niveau de déchargement et, lorsqu'elles sont au niveau de traitement, être amenées dans l'unité de traitement 10 et en être retirées par un va-et-vient horizontal selon les flèches TG et TD. Cet entraînement en va-et-vient horizontal peut être réalisé de toute manière connue. Par exemple, les tables navettes peuvent présenter une prise mécanique 23 avec laquelle peut venir en prise un entraîneur 21 porté par une chaîne 27 qui engraine sur une roue dentée 27' formant la sortie d'un moteur d'entraînement. Par exemple, la prise mécanique 23 est formée par une fente verticale ménagée entre deux fers plats, la chaîne 27 est statique verticalement et disposée de telle sorte que lorsque qu'une table navette parvient au niveau de traitement alors que l'entraîneur 21 est en bout de course horizontale, cet entraîneur vient s'insérer dans la prise mécanique formée par la fente. Ensuite, l'entraîneur reste engagé avec la prise mécanique pendante toute la course d'entraînement de la chaîne tant que le support mobile reste au niveau de traitement.

Sur la figure 1, les deux tables navettes sont en position de dégagement, la table navette 22A étant au niveau de traitement défini par le plan de traitement 14. Sur la figure 2, cette table navette 22A est située dans l'unité de traitement 10, la pièce WA qu'elle porte pouvant alors être traitée dans cette unité. La pièce WB portée par l'autre table navette 22B peut dès lors être chargée/déchargée en temps masqué, pendant ce traitement. Ensuite, la table navette 22A pourra revenir en position de dégagement et l'ensemble pourra être abaissé dans le sens de la flèche VB jusqu'à placer la table navette 22B au niveau de traitement, de sorte à pouvoir la déplacer horizontalement sur le plan de traitement dans l'unité 10. Ainsi, pendant le traitement de la pièce WB, la pièce WA peut être déchargée et remplacée par une autre pièce en attente.

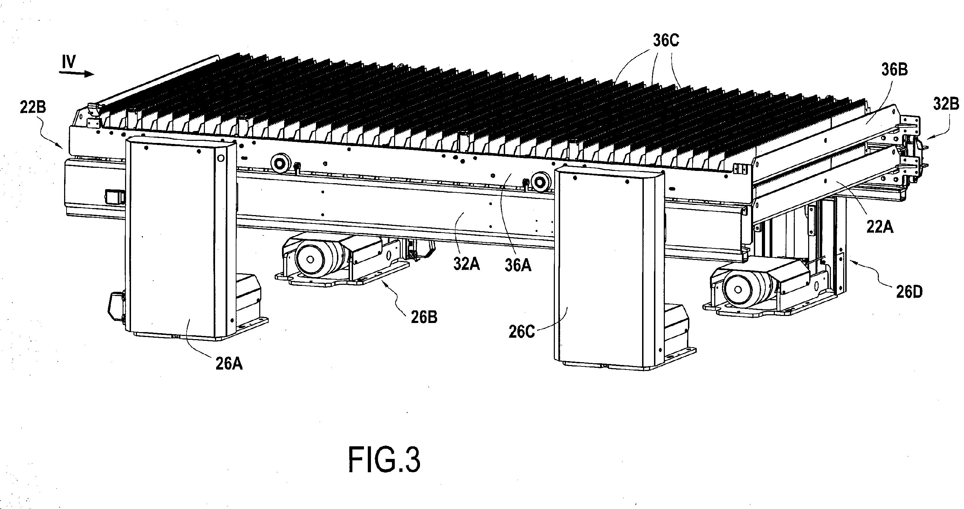

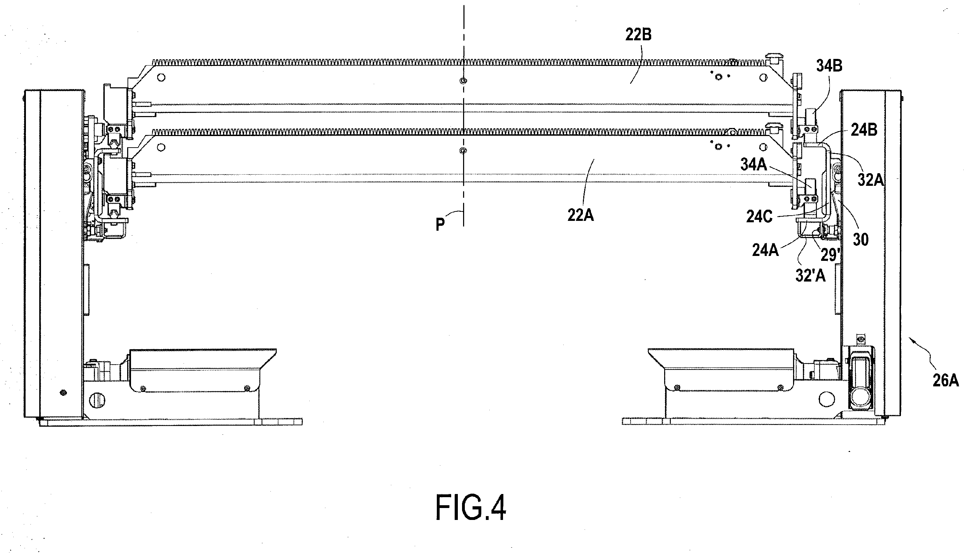

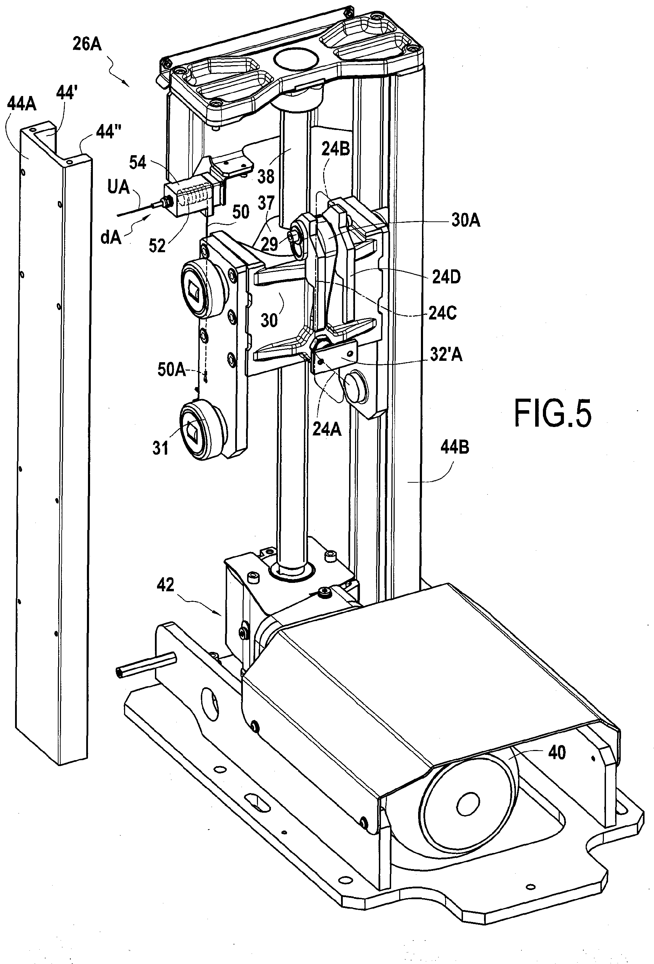

Les figures 3 et 4 montrent le dispositif de support et de positionnement des tables navettes 22A et 22B. On voit que, en l'espèce, ce dispositif comprend quatre colonnes de support, 26A, 26B, 26C et 26D. A l'instar de la colonne 26A représentée sur les figures 4 et 5, chaque colonne de support comporte un taquet 30. Ces taquets portent ensemble un châssis plan qui, lui-même, porte les tables navettes. En l'espèce, le châssis comprend un premier longeron 32A qui s'étend entre les premier et troisième taquets respectivement portés par les première et troisième colonnes 26A et 26C, ainsi qu'un deuxième longeron 32B, qui s'étend entre les deuxième et quatrième taquets, respectivement portés par les deuxième et quatrième colonnes 26B et 26D. En l'espèce, il peut ne pas être nécessaire que le châssis comporte en outre des traverses, lorsque la rigidité suffisante peut être assurée par ces simples longerons. Comme on le voit sur la figure 4, les longerons ont une section en U dont la base est orientée vers l'extérieur et dont les branches sont horizontales et orientées vers l'intérieur, c'est-à-dire vers le plan vertical longitudinal P de symétrie des tables navettes. Ainsi, les deux branches horizontales du U forment respectivement les rails 24A et 24B sur lesquels coulissent les tables navettes grâce à des galets 34A et 34B respectivement portés par les tables navettes. On pourrait imaginer une configuration inversée, les galets étant portés par les rails formés sur les longerons fixes.

Comme le montre la figure 3, les tables navettes ont en elles-mêmes des structures classiques et comprennent chacune un cadre formé par des longerons longitudinaux 36A entre lesquels s'étendent les traverses 36B d'extrémité et des traverses courantes 36C dont les extrémités supérieures sont pourvues de picots, poils ou analogues pour porter les pièces devant être traitées. Les longerons 36A portent les galets 34A et 34B et sont évidemment parallèles aux longerons 32A et 32B du châssis précité, porté par les taquets des colonnes de support.

Comme on le voit mieux sur la figure 5, chacun des taquets 30 prend la forme d'un chariot coopérant avec une vis sans fin 38 entrainée en rotation par un moteur de type moteur électrique 40. Le chariot comprend en effet une bague formant écrou 37 dont le filet coopère avec celui de la vis sans fin. En l'espèce, le moteur 40 est disposé horizontalement, et sa sortie coopère avec la vis sans fin 38, qui est verticale, par un mécanisme de renvoi d'angle 42. Pour assurer la stabilité en déplacement vertical du taquet 30, la colonne comprend des moyens de guidage de ce déplacement vertical. En l'espèce, la colonne 26A représentée sur la figure 5 comprend deux joues opposées 44A et 44B ayant chacune une section horizontale en U, dont les deux branches, respectivement 44' et 44" forment des pistes de roulement pour des galets 31 portés par le taquet 30 de part et d'autre de l'écrou 37.

Comme indiqué plus haut, le châssis qui porte les tables navettes est lui-même porté par les taquets. En l'espèce, comme indiqué, ce châssis est formé de deux longerons 32A et 32B. Sur la figure 5, la partie en U du longeron 32A est omise. Sur la figure 4, on voit cependant que cette partie en U, via la face externe de sa base 24C, est fixée, par exemple par soudure, à une oreille de support 24D ayant deux branches percées en partie haute pour accueillir un axe de fixation 29, qui passe également dans un perçage formé en partie haute d'une nervure verticale 30A du taquet 30. Cette nervure 30A s'étend entre les deux branches de l'oreille de support 24D lorsque le longeron est fixé au taquet, par l'axe 29. Par ailleurs, dans sa partie inférieure, le longeron 32A présente une extension d'appui 32'A, par exemple formée par une pièce en U (dont seule une partie est visible sur la figure 5), par laquelle la partie inférieure de ce longeron repose en appui contre une tête de réglage 29', par exemple formée par la tête d'une vis horizontale qui est plus ou moins enfoncée par vissage dans la partie inférieure du taquet 30 pour régler la verticalité du longeron.

Ainsi qu'il vient d'être décrit, le taquet 30 de chacune des colonnes de support 26A à 26D peut être déplacé verticalement par un actionneur respectif. En l'espèce, l'actionneur comprend le moteur 40, en particulier un moteur électrique, en particulier un moteur électrique de type asynchrone, moteur électrique linéaire ou servomoteur. Comme indiqué, la sortie du moteur 40 entraîne en rotation une vis sans fin 38, qui constitue la partie de l'actionneur qui coopère directement avec les taquets. D'autres moyens qu'une vis sans fin coopérant avec un écrou, par exemple une vis à bille, une vis à rouleaux satellites, une chaîne, une courroie, ou encore un système à came pourraient être prévus, pourvu que le déplacement des taquets puisse être géré avec précision, avec un temps de réponse court aux commandes émises par l'unité de commande ECU.

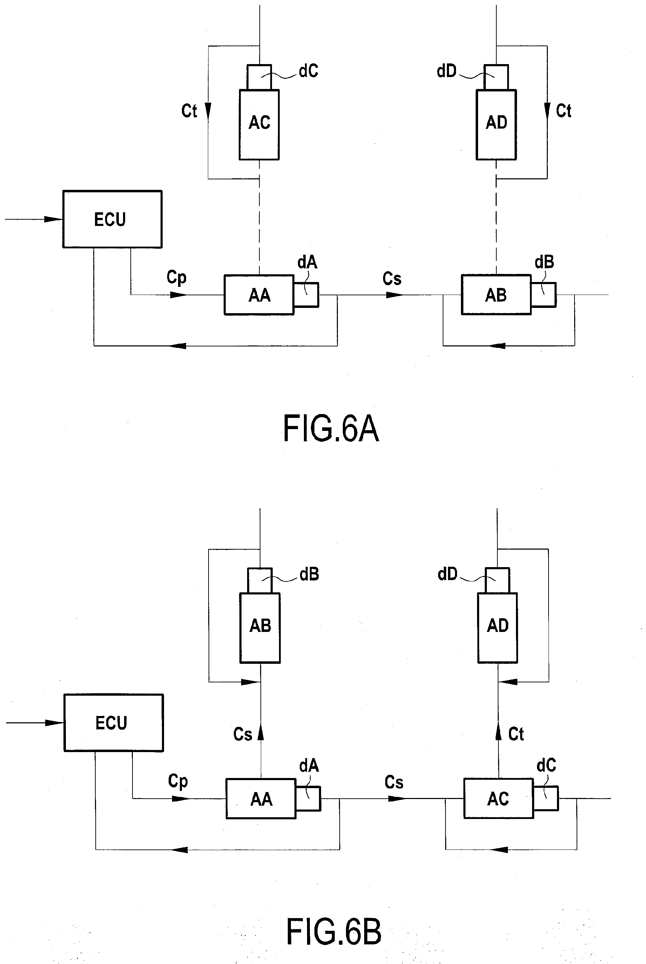

Selon le présent exposé, l'unité de commande ECU établit une consigne de déplacement et commande chaque actionneur en fonction de cette consigne. En l'espèce, comme illustré sur les figures 6A et 6B, la commande est réalisée selon un asservissement-maitre esclave. Sur ces figures, les actionneurs des premier, deuxième, troisième et quatrième taquets sont respectivement signalés par les références AA, AB, AC et AD. En l'espèce, l'actionneur AA du premier taquet est un actionneur maître qui reçoit une consigne de déplacement primaire Cp de l'unité ECU. Les autres actionneurs sont des actionneurs esclaves, qui fonctionnent selon un asservissement en boucle fermée.

Plus précisément, en l'espèce, les actionneurs AB et AC du deuxième et du troisième taquet sont asservis en esclaves sur l'actionneur AA du premier taquet, et l'actionneur AD du quatrième taquet est asservi en esclave sur l'actionneur AC du troisième taquet. En l'espèce, l'actionneur AA est maître. Il reçoit une consigne primaire Cp de l'unité de commande ECU et émet une consigne secondaire Cs pour son actionneur esclave AB. Les actionneurs AC et AD sont eux-mêmes esclaves de, respectivement, les actionneurs AA et AB, en étant commandés sur la base d'une consigne tertiaire Ct. Pour chacun des actionneurs AB, AC et AD, l'asservissement est en boucle fermée. Ainsi, la valeur d'un paramètre représentatif de la position des taquets respectivement associés aux actionneurs respectifs est détectée en sortie de ces actionneurs et la valeur mesurée sert à corriger pour chacun des actionneurs les consignes données en entrée. Chaque taquet est associé à un détecteur associé respectif, respectivement dA, dB, dC et dD qui détectent un paramètre représentatif de la position du taquet associé. Les valeurs ainsi détectées sont utilisées par l'ECU pour corriger les consignes de déplacement des actionneurs respectifs.

Pour l'actionneur maître AA, la consigne de déplacement peut être élaborée sur la base d'accélération à une vitesse donnée, jusqu'à ce que le taquet associé à cet actionneur atteigne une position déterminée. Le détecteur associé dA peut être un détecteur de position qui, lorsque la position souhaitée est atteinte, transmet à l'unité de commande ECU l'information de faire cesser le déplacement. On pourrait bien évidemment prévoir que tous les actionneurs soient maîtres et reçoivent directement leurs consignes de déplacement de l'unité ECU, les détecteurs associés à chacun des taquets pouvant être des détecteurs de position qui, lorsque la position souhaitée est atteinte, transmettent à l'ECU l'information d'arrêter le déplacement de tous les actionneurs. Les détecteurs de position mesurent une position en hauteur des taquets concernés, par exemple en mesurant une course de déplacement par rapport à une position initiale.

Cependant, comme indiqué, et conformément à l'exemple représenté sur la figure 6A, on peut utiliser un asservissement de type maître esclave. Dans ce cas, en particulier, les déplacements des deuxième et troisième taquets sont asservis sur celui du premier taquet et corrigés par des données de correction. Ainsi, le détecteur dB associé au deuxième actionneur AB détecte la valeur d'un paramètre représentatif de la position du deuxième taquet et, sur la base de la valeur détectée transmise à l'unité de commande ECU, cette dernière peut déterminer des données de correction et émettre ces données de correction pour corriger la consigne secondaire Cs fournies au deuxième actionneur AB. De même, les détecteurs dC et dD, respectivement associés aux actionneurs AC et AD des troisième et quatrième taquets détectent les valeurs de paramètres représentatif des positions des troisième et quatrième taquets et, sur la base des valeurs détectées, l'unité de commande ECU peut corriger les consignes de déplacement Ct fournies au troisième et au quatrième actionneur AC et AD. Par exemple, le détecteur dB associé au deuxième taquet, c'est-à-dire au deuxième actionneur AB, peut être un détecteur de position configuré pour détecter la position en hauteur du deuxième taquet, tandis que le détecteur dC associé au troisième taquet et donc associé au troisième actionneur AC, peut être un détecteur d'inclinaison configuré pour détecter l'inclinaison du longeron 32A qui s'étend entre les premier et troisième taquets. De même, le détecteur dD associé au quatrième taquet et donc au quatrième actionneur AD, peut être un détecteur détectant un paramètre de même type que le détecteur dC, en l'espèce l'inclinaison, c'est-à-dire l'inclinaison du deuxième longeron 32B. Ainsi, les premier et deuxième taquets sont déplacés en fonction d'une consigne de déplacement en hauteur, et les troisième et quatrième taquets sont déplacés en fonction de consignes d'inclinaison qui servent à maintenir horizontaux les longerons 32A et 32B.

Dans l'exemple qui vient d'être décrit, les paramètres représentatifs des positions des taquets ne sont pas les mêmes pour tous les taquets : les détecteurs dA et dB sont des détecteurs de position en hauteur, tandis que les détecteurs dC et dD sont des détecteurs d'inclinaison.

On pourrait cependant au contraire prévoir que ces paramètres soient de même nature pour tous les taquets et, en particulier, que les détecteurs dA, dB, dC et dD soient tous des détecteurs de position. Dans ce cas, on peut prévoir un asservissement maître-esclave du type représenté sur la figure 6B, selon lequel l'actionneur AA du premier taquet reçoit une consigne primaire Cp, les actionneurs AB et AC des deuxième et troisième taquets reçoivent les consignes secondaires Cs fournies par la sortie de l'actionneur AA du premier taquet, et l'actionneur AD du quatrième taquet reçoit une consigne tertiaire Ct fournie par la sortie de l'actionneur AC du troisième taquet.

Un exemple de réalisation pour le détecteur de position dA associé au premier taquet est décrit en référence à la figure 5. Il s'agit en l'espèce d'un capteur à câble potentiométrique comprenant un câble 50 qui s'enroule autour d'un tambour 52 qui est relié à un potentiomètre 54. L'extrémité 50A du câble opposé au tambour est reliée au taquet 30, par exemple à l'une des platines de support des galets 31, de sorte que le câble s'enroule et se déroule au gré des déplacements verticaux du taquet 30, le tambour étant appelé en permanence dans le sens de l'enroulement. La tension électrique UA en sortie du potentiomètre 54 est mesurée, et sa valeur sert à calculer la longueur de câble déroulé et, par conséquent, la position en hauteur du taquet. Ceci est bien entendu qu'un exemple de réalisation.

Le ou les capteurs d'inclinaison peuvent par exemple être du type basé sur les technologies MEMS qui, en sortie fournissent une grandeur électrique (tension ou intensité de courant par exemple) dont la valeur dépend de l'angle d'inclinaison du capteur. Ces capteurs peuvent être fixés sur les longerons 32A et 32B.

Comme indiqué, la consigne de déplacement donnée aux différents actionneurs peut en particulier comprendre une consigne de position et/ou une consigne d'inclinaison. On peut par ailleurs régler l'unité de commande ECU de telle sorte que le début du déplacement des taquets d'une position vers une autre soit réalisé selon une phase de déplacement rapide (accélération/vitesse élevée) et que la fin de ce déplacement soit réalisée à vitesse plus lente. Par exemple, lorsque le détecteur associé au taquet déplacé par l'actionneur maître détecte que la valeur détectée se rapproche de la valeur de consigne, la vitesse peut être ralentie. On peut prévoir une régulation de type PID.

Il convient de relever que les actionneurs peuvent servir à régler la position initiale des taquets lors de la mise en service de l'installation. En effet, le sol sur lequel reposent les colonnes peut ne pas être parfaitement horizontal. Dans ce cas, les colonnes peuvent être installées et les différents actionneurs être commandés de manière à atteindre, dans une position souhaitée, par exemple en position basse maximale des taquets, l'horizontalité souhaitée. Il n'est donc pas nécessaire de recourir à des cales mécaniques ou similaires. Ensuite, une fois l'horizontalité obtenue, les actionneurs peuvent être initialisés à 0 pour pouvoir être commandés par l'unité de commande ECU selon les différentes phases de déplacement en hauteur des tables navettes.

Comme indiqué, la table navette qui est en position de dégagement et en position de traitement, au niveau du plan de traitement 14, peut être entrée et extraite de l'unité de traitement 10 par un déplacement horizontal en va-et-vient. Dans la mesure où, lors du déplacement vertical des taquets, les tables navettes sont écartées de l'entrée de l'unité de traitement, on peut prévoir de commencer le déplacement horizontal de cette table navette concernée avant même la fin du déplacement vertical visant à la faire parvenir dans le plan de traitement.

## Revendications

1. Dispositif (20) de support et de positionnement de tables navettes (22A, 22B) dans une installation de traitement de pièces, comprenant au moins trois colonnes de support (26A, 26B, 26C) comportant respectivement des premier, deuxième et troisième taquets (30) aptes, chacun, à être déplacés par un actionneur respectif (AA, AB, AC), les taquets (30) portant un châssis (32A, 32B) qui définit un premier et un deuxième plan horizontal de support pour, respectivement, une première et une deuxième table navette (22A, 22B) destinées à porter au moins une pièce à traiter (WA, WB) dans l'installation, le dispositif comportant une unité de commande (ECU) configurée pour commander les actionneurs (AA, AB, AC) de manière à déplacer les taquets (30) entre au moins une position haute et une position basse dans lesquelles l'un ou l'autre des premier et deuxième plans horizontaux de support est placé à un niveau de traitement (14) prédéterminé,
**caractérisé en ce que** l'unité de commande (ECU) est apte à établir une consigne de déplacement (Cp, Cs, Ct) et à commander chaque actionneur selon ladite consigne de déplacement en commandant les actionneurs (AA, AB, AC, AD) selon un asservissement maître-esclave en émettant une consigne de déplacement (Cp) pour l'actionneur du premier taquet (AA) qui est un actionneur maître, dont les autres actionneurs (AB, AC, AD) sont esclaves, en particulier selon un asservissement en boucle fermée.

2. Dispositif selon la revendication 1, comprenant en outre une quatrième colonne de support (26D) comportant un quatrième taquet (30) apte à être déplacé par un actionneur respectif (AD), le châssis comprenant un premier longeron (32A) qui s'étend entre le premier et le troisième taquet et un deuxième longeron (32B) qui s'étend entre le deuxième et le quatrième taquet.

3. Dispositif selon la revendication 2, dans lequel les actionneurs (AB, AC) du deuxième et du troisième taquet sont asservis en esclaves sur l'actionneur (AA) du premier taquet, et l'actionneur (AD) du quatrième taquet est asservi en esclave sur l'actionneur (AB) du deuxième taquet ou sur l'actionneur (AC) du troisième taquet.

4. Dispositif selon l'une quelconque des revendications 1 à 3, dans lequel chaque taquet est associé à un détecteur associé respectif (dA, dB, dC, dD), apte à détecter un paramètre représentatif de la position du taquet associé, et dans lequel la consigne de déplacement (Cp, Cs, Ct) comprend la consigne d'opérer un déplacement de chaque taquet jusqu'à ce qu'une valeur cible pour ledit paramètre représentatif de la position du taquet considéré soit atteinte.

5. Dispositif selon la revendication 4, dans lequel le détecteur (dA) associé au premier taquet est un détecteur de position configuré pour détecter la position en hauteur du premier taquet et dans lequel la consigne de déplacement comprend la consigne (Cp) d'opérer un déplacement du premier taquet jusqu'à ce qu'une hauteur donnée, repérée par le détecteur de position, soit atteinte.

6. Dispositif selon la revendication 5, dans lequel le détecteur associé à chaque taquet est un détecteur de position configuré pour détecter la position en hauteur du taquet associé et dans lequel la consigne de déplacement est une consigne indépendante pour chaque taquet.

7. Dispositif selon la revendication 5, dans lequel les déplacements du deuxième et du troisième taquet sont asservis sur celui du premier taquet et corrigés par des données de correction, issues des valeurs des paramètres représentatifs des positions des deuxième et troisième taquets, détectées par les détecteurs (dB, dC) respectivement associés au deuxième et au troisième taquet.

8. Dispositif selon la revendication 7, dans lequel le détecteur (dB) associé au deuxième taquet est un détecteur de position configuré pour détecter la position en hauteur du deuxième taquet, tandis que le détecteur (dC) associé au troisième taquet est un détecteur d'inclinaison, configuré pour détecter l'inclinaison d'un segment du châssis qui s'étend entre le troisième taquet et l'un des premier et deuxième taquets.

9. Dispositif selon la revendication 7, dans lequel le détecteur (dB) associé au deuxième taquet est un détecteur d'inclinaison configuré pour détecter l'inclinaison d'un segment du châssis qui s'étend entre le premier et le deuxième taquet, et le détecteur (dC) associé au troisième taquet est un détecteur d'inclinaison, configuré pour détecter l'inclinaison d'un segment du châssis qui s'étend entre le troisième taquet et au moins l'un des premier et deuxième taquets.

10. Dispositif selon la revendication 8 ou 9 prise en combinaison avec la revendication 2, dans lequel le détecteur (dC) associé au troisième taquet est un détecteur d'inclinaison, configuré pour détecter l'inclinaison du premier longeron (32A), et le détecteur associé au quatrième taquet (dD) est un détecteur d'inclinaison, configuré pour détecter l'inclinaison du deuxième longeron (32B).

11. Dispositif selon l'une quelconque des revendications 1 à 10, dans lequel les actionneurs (AA, AB, AC, AD) comprennent des moteurs électriques (40), en particulier des moteurs électriques asynchrones, moteurs électriques linéaires ou servomoteurs.

12. Procédé de commande d'un dispositif (20) de support et de positionnement de tables navettes (22A, 22B) dans une installation de traitement de pièces, le dispositif comprenant au moins trois colonnes de support (26A, 26B, 26C, 26D) comportant respectivement des premier, deuxième et troisième taquets (30) aptes, chacun, à être déplacés par un actionneur respectif (AA, AB, AC, AD), les taquets portant un châssis qui définit un premier et un deuxième plan horizontal de support pour, respectivement, une première et une deuxième table navette (22A, 22B) destinées à porter au moins une pièce (WA, WB) à traiter dans l'installation, procédé selon lequel on commande les actionneurs (AA, AB, AC, AD) de manière à déplacer les taquets (30) entre au moins une position haute et une position basse dans lesquelles l'un ou l'autre des premier et deuxième plans horizontaux de support est placé à un niveau de traitement prédéterminé,
**caractérisé en ce qu'**on établit une consigne de déplacement (Cp, Cs, Ct) et on commande chaque actionneur selon ladite consigne de déplacement en commandant les actionneurs (AA, AB, AC, AD) selon un asservissement maître-esclave, selon une consigne de déplacement maître (Cp) pour l'actionneur (AA) du premier taquet, qui est un actionneur maître, et des consignes de déplacement esclaves (Cs, Ct) pour les autres actionneurs (AB, AC, AD), qui sont des actionneurs esclaves.

13. Procédé selon la revendication 12, dans lequel on commande les actionneurs esclaves (AB, AC, AD) en boucle fermée.

14. Procédé selon la revendication 12 ou 13, dans lequel, pour chaque taquet (30), on détecte un paramètre représentatif de la position du taquet considéré, et on opère un déplacement de chaque taquet jusqu'à ce qu'une valeur cible donnée, pour ledit paramètre représentatif de la position du taquet considéré soit atteinte.

15. Procédé selon la revendication 14, dans lequel le paramètre représentatif de la position du premier taquet est la position en hauteur dudit premier taquet.

16. Procédé selon la revendication 15, dans lequel le paramètre représentatif de la position du troisième taquet est l'inclinaison d'un segment (32A) du châssis qui s'étend entre le troisième taquet et au moins l'un des premiers et deuxième taquets.

17. Procédé selon l'une quelconque des revendications 12 à 16, dans lequel, à l'occasion d'un déplacement des taquets (30) visant à placer l'un des premier et deuxième plans horizontaux de support au niveau de traitement (14) prédéterminé, on commande un déplacement horizontal vers une zone de traitement de la table navette (22A, 22B) située sur ledit un des premier et deuxième plans horizontaux de support, avant que ledit un des premier et deuxième plans horizontaux de support n'ait atteint ledit niveau de traitement prédéterminé.

## Patentansprüche

1. Vorrichtung (20) zum Stützen und Positionieren von Shuttletischen (22A, 22B) in einer Anlage zur Bearbeitung von Teilen, umfassend wenigstens drei Stützsäulen (26A, 26B, 26C), die einen ersten, einen zweiten bzw. einen dritten Anschlag (30) umfassen, die jeweils geeignet sind, durch einen jeweiligen Aktor (AA, AB, AC) bewegt zu werden, wobei die Anschläge (30) einen Rahmen (32A, 32B) tragen, welcher eine erste und eine zweite horizontale Stützebene für einen ersten bzw. einen zweiten Shuttletisch (22A, 22B) definiert, die dazu bestimmt sind, wenigstens ein in der Anlage zu bearbeitendes Teil (WA, WB) zu tragen, wobei die Vorrichtung eine Steuereinheit (ECU) umfasst, die dazu ausgelegt ist, die Aktoren (AA, AB, AC) zu steuern, um die Anschläge (30) zwischen wenigstens einer oberen Position und einer unteren Position zu bewegen, in denen die eine oder die andere der ersten und zweiten horizontalen Stützebenen in einer vorbestimmten Bearbeitungshöhe (14) angeordnet ist,
**dadurch gekennzeichnet, dass** die Steuereinheit (ECU) geeignet ist, einen Bewegungssollwert (Cp, Cs, Ct) zu erstellen und jeden Aktor gemäß dem Bewegungssollwert zu steuern, indem die Aktoren (AA, AB, AC, AD) entsprechend einer Master-Slave-Regelung unter Ausgeben eines Bewegungssollwertes (Cp) für den Aktor des ersten Anschlags (AA), welcher ein Master-Aktor ist, wobei die anderen Aktoren (AB, AC, AD) Slaves sind, insbesondere in einem geschlossenen Regelkreis gesteuert werden.

2. Vorrichtung nach Anspruch 1, ferner umfassend eine vierte Stützsäule (26D) mit einem vierten Anschlag (30), der geeignet ist, durch einen jeweiligen Aktor (AD) bewegt zu werden, wobei der Rahmen einen ersten Längsträger (32A), der sich zwischen dem ersten und dem dritten Anschlag erstreckt, sowie einen zweiten Längsträger (32B) umfasst, der sich zwischen dem zweiten und dem vierten Anschlag erstreckt.

3. Vorrichtung nach Anspruch 2, bei der die Aktoren (AB, AC) des zweiten und des dritten Anschlags als Slaves an dem Aktor (AA) des ersten Anschlags geregelt werden und der Aktor (AD) des vierten Anschlags als Slave an dem Aktor (AB) des zweiten Anschlags oder an dem Aktor (AC) des dritten Anschlags geregelt wird.

4. Vorrichtung nach einem der Ansprüche 1 bis 3, bei der jeder Anschlag einem jeweiligen zugeordneten Detektor (dA, dB, dC, dD) zugeordnet ist, welcher geeignet ist, einen Parameter zu erfassen, der für die Position des zugeordneten Anschlags repräsentativ ist, und bei der der Bewegungssollwert (Cp, Cs, Ct) den Sollwert umfasst, um eine Bewegung eines jeden Anschlags durchzuführen, bis ein Zielwert für den für die Position des betrachteten Anschlags repräsentativen Parameter erreicht ist.

5. Vorrichtung nach Anspruch 4, bei der der Detektor (dA), welcher dem ersten Anschlag zugeordnet ist, ein Positionsdetektor ist, der dazu ausgelegt ist, die Position des ersten Anschlags in der Höhe zu erfassen, und bei der der Bewegungssollwert den Sollwert (Cp) umfasst, um eine Bewegung des ersten Anschlags durchzuführen, bis eine durch den Positionsdetektor ausgemachte gegebene Höhe erreicht ist.

6. Vorrichtung nach Anspruch 5, bei der einem jeden Anschlag zugeordnete Detektor ein Positionsdetektor ist, der dazu ausgelegt ist, die Position des zugeordneten Anschlags in der Höhe zu erfassen, und bei dem der Bewegungssollwert ein unabhängiger Sollwert für jeden Anschlag ist.

7. Vorrichtung nach Anspruch 5, bei der die Bewegungen des zweiten und des dritten Anschlags auf diejenige des ersten Anschlags hin geregelt und durch Korrekturdaten korrigiert werden, die aus den Werten der Parameter abgeleitet sind, welche für die Positionen des zweiten und des dritten Anschlags repräsentativ sind, die durch die dem zweiten bzw. dem dritten Anschlag zugeordneten Detektoren (dB, dC) erfasst werden.

8. Vorrichtung nach Anspruch 7, bei der der Detektor (dB), welcher dem zweiten Anschlag zugeordnet ist, ein Positionsdetektor ist, der dazu ausgelegt ist, die Position des zweiten Anschlags in der Höhe zu erfassen, während der Detektor (dC), welcher dem dritten Anschlag zugeordnet ist, ein Neigungsdetektor ist, der dazu ausgelegt ist, die Neigung eines Segments des Rahmens, das sich zwischen dem dritten Anschlag und einem der ersten und zweiten Anschläge erstreckt, zu erfassen.

9. Vorrichtung nach Anspruch 7, bei der der Detektor (dB), welcher dem zweiten Anschlag zugeordnet ist, ein Neigungsdetektor ist, der dazu ausgelegt ist, die Neigung eines Segments des Rahmens, das sich zwischen dem ersten Anschlag und dem zweiten Anschlag erstreckt, zu erfassen, und der Detektor (dC), welcher dem dritten Anschlag zugeordnet ist, ein Neigungsdetektor ist, der dazu ausgelegt ist, die Neigung eines Segments des Rahmens, das sich zwischen dem dritten Anschlag und wenigstens einem der ersten und zweiten Anschläge erstreckt, zu erfassen.

10. Vorrichtung nach Anspruch 8 oder 9 in Kombination mit Anspruch 2, bei der der Detektor (dC), welcher dem dritten Anschlag zugeordnet ist, ein Neigungsdetektor ist, welcher dazu ausgelegt ist, die Neigung des ersten Längsträgers (32A) zu erfassen, und der Detektor (dD), welcher dem vierten Anschlag zugeordnet ist, ein Neigungsdetektor ist, welcher dazu ausgelegt ist, die Neigung des zweiten Längsträgers (32B) zu erfassen.

11. Vorrichtung nach einem der Ansprüche 1 bis 10, bei der die Aktoren (AA, AB, AC, AD) Elektromotoren (40), insbesondere asynchrone Elektromotoren, Linearelektromotoren oder Servomotoren umfassen.

12. Verfahren zur Steuerung einer Vorrichtung (20) zum Stützen und Positionieren von Shuttletischen (22A, 22B) in einer Anlage zur Bearbeitung von Teilen, wobei die Vorrichtung wenigstens drei Stützsäulen (26A, 26B, 26C, 26D) umfasst, die einen ersten, einen zweiten bzw. einen dritten Anschlag (30) umfassen, die jeweils geeignet sind, durch einen jeweiligen Aktor (AA, AB, AC, AD) bewegt zu werden, wobei die Anschläge einen Rahmen tragen, welcher eine erste und eine zweite horizontale Stützebene für einen ersten bzw. einen zweiten Shuttletisch (22A, 22B) definiert, die dazu bestimmt sind, wenigstens ein in der Anlage zu bearbeitendes Teil (WA, WB) zu tragen, Verfahren, wonach die Aktoren (AA, AB, AC, AD) gesteuert werden, um die Anschläge (30) zwischen wenigstens einer oberen Position und einer unteren Position zu bewegen, in denen die eine oder die andere der ersten und zweiten horizontalen Stützebenen in einer vorbestimmten Bearbeitungshöhe angeordnet ist,
**dadurch gekennzeichnet, dass** ein Bewegungssollwert (Cp, Cs, Ct) erstellt wird und jeder Aktor gemäß dem Bewegungssollwert gesteuert wird, indem die Aktoren (AA, AB, AC, AD) entsprechend einer Master-Slave-Regelung gemäß einem Master-Bewegungssollwert (Cp) für den Aktor (AA) des ersten Anschlags, welcher ein Master-Aktor ist, und Slave-Bewegungssollwerten (Cs, Ct) für die anderen Aktoren (AB, AC, AD), welche Slave-Aktoren sind, gesteuert werden.

13. Verfahren nach Anspruch 12, bei dem die Slave-Aktoren (AB, AC, AD) in geschlossener Schleife gesteuert werden.

14. Verfahren nach Anspruch 12 oder 13, bei dem für jeden Anschlag (30) ein Parameter erfasst wird, der für die Position des betrachteten Anschlags repräsentativ ist, und eine Bewegung jedes Anschlags durchgeführt wird, bis ein gegebener Zielwert für den für die Position des betrachteten Anschlags repräsentativen Parameter erreicht ist.

15. Verfahren nach Anspruch 14, bei dem der Parameter, welcher für die Position des ersten Anschlags repräsentativ ist, die Position des ersten Anschlags in der Höhe ist.

16. Verfahren nach Anspruch 15, bei dem der Parameter, welcher für die Position des dritten Anschlags repräsentativ ist, die Neigung eines Segments (32A) des Rahmens ist, das sich zwischen dem dritten Anschlag und wenigstens einem der ersten und zweiten Anschläge erstreckt.

17. Verfahren nach einem der Ansprüche 12 bis 16, bei dem anlässlich einer Bewegung der Anschläge (30), deren Ziel es ist, eine der ersten und zweiten horizontalen Stützebenen in der vorbestimmten Bearbeitungshöhe (14) anzuordnen, eine horizontale Bewegung in Richtung eines Bearbeitungsbereichs des Shuttletisches (22A, 22B) gesteuert wird, der sich auf der einen der ersten und zweiten horizontalen Stützebenen befindet, bevor die eine der ersten und zweiten horizontalen Stützebenen die vorbestimmte Bearbeitungshöhe erreicht hat.

## Claims

1. A device (20) for supporting and positioning shuttle tables (22A, 22B) in a workpiece treatment installation, comprising at least three support columns (26A, 26B, 26C) including respectively first, second and third brackets (30) each able to be displaced by a respective actuator (AA, AB, AC), the brackets (30) carrying a chassis (32A, 32B) which defines a first and a second horizontal support plane for, respectively, a first and a second shuttle table (22A, 22B) intended to carry at least one workpiece to be treated (WA, WB) in the installation, the device including a control unit (ECU) configured to control the actuators (AA, AB, AC) so as to displace the brackets (30) between at least one high position and one low position in which either of the first and second horizontal support planes is placed at a predetermined treatment level (14),
**characterized in that** the control unit (ECU) is able to establish a displacement instruction (Cp, Cs, Ct) and to control each actuator according to said displacement instruction by controlling the actuators (AA, AB, AC, AD) according to a master-slave servo-control by issuing a displacement instruction (Cp) for the actuator of the first bracket (AA) which is a master actuator, of which the other actuators (AB, AC, AD) are slaves, particularly according to a closed-loop servo-control.

2. The device according to claim 1, further comprising a fourth support column (26D) including a fourth bracket (30) able to be displaced by a respective actuator (AD), the chassis comprising a first spar (32A) which extends between the first and the third bracket and a second spar (32B) which extends between the second and the fourth bracket.

3. The device according to claim 2, wherein the actuators (AB, AC) of the second and the third bracket are slave servo-controlled on the actuator (AA) of the first bracket, and the actuator (AD) of the fourth bracket is slave servo-controlled on the actuator (AB) of the second bracket or on the actuator (AC) of the third bracket.

4. The device according to any one of claims 1 to 3, wherein each bracket is associated with a respective associated detector (dA, dB, dC, dD) able to detect a parameter representative of the position of the associated bracket, and wherein the displacement instruction (Cp, Cs, Ct) comprises the instruction to operate a displacement of each bracket until a target value for said parameter representative of the position of the considered bracket is reached.

5. The device according to claim 4, wherein the detector (dA) associated with the first bracket is a position detector configured to detect the height position of the first bracket and wherein the displacement instruction comprises the instruction (Cp) to operate a displacement of the first bracket until a given height, identified by the position detector, is reached.

6. The device according to claim 5, wherein the associated detector at each bracket is a position detector configured to detect the height position of the associated bracket and wherein the displacement instruction is an independent instruction for each bracket.

7. The device according to claim 5, wherein the displacements of the second and the third bracket are servo-controlled on the displacement of the first bracket and corrected by correction data, derived from the values of the parameters representative of the positions of the second and third brackets, detected by the detectors (dB, dC) respectively associated with the second and the third bracket.

8. The device according to claim 7, wherein the detector (dB) associated with the second bracket is a position detector configured to detect the height position of the second bracket, while the detector (dC) associated with the third bracket is a tilt detector, configured to detect the tilt of a segment of the chassis which extends between the third bracket and one of the first and second brackets.

9. The device according to claim 7, wherein the detector (dB) associated with the second bracket is a tilt detector configured to detect the tilt of a segment of the chassis which extends between the first and the second bracket, and the detector (dC) associated with the third bracket is a tilt detector, configured to detect the tilt of a segment of the chassis which extends between the third bracket and at least one of the first and second brackets.

10. The device according to claim 8 or 9 taken in combination with claim 2, wherein the detector (dC) associated with the third bracket is a tilt detector, configured to detect the tilt of the first spar (32A), and the detector associated with the fourth bracket (dD) is a tilt detector, configured to detect the tilt of the second spar (32B).

11. The device according to any one of claims 1 to 10, wherein the actuators (AA, AB, AC, AD) comprise electric motors (40), particularly asynchronous electric motors, linear electric motors or servomotors.

12. A method for controlling a device (20) for supporting and positioning shuttle tables (22A, 22B) in a workpiece treatment installation, the device comprising at least three support columns (26A, 26B, 26C, 26D) including respectively first, second and third brackets (30) each able to be displaced by a respective actuator (AA, AB, AC, AD), the brackets carrying a chassis which defines a first and a second horizontal support plane for, respectively, a first and a second shuttle table (22A, 22B) intended to carry at least one workpiece (WA, WB) to be treated in the installation, method according to which the actuators (AA, AB, AC, AD) are controlled so as to displace the brackets (30) between at least one high position and one low position in which either of the first and second horizontal support planes is placed at one predetermined treatment level,
**characterized in that** a displacement instruction (Cp, Cs, Ct) is established and each actuator is controlled according to said displacement instruction by controlling the actuators (AA, AB, AC, AD) according to a master-slave servo-control, according to a master displacement instruction (Cp) for the actuator (AA) of the first bracket, which is a master actuator, and slave displacement instructions (Cs, Ct) for the other actuators (AB, AC, AD), which are slave actuators.

13. The method according to claim 12, wherein the slave actuators (AB, AC, AD) are controlled in closed loop.

14. The method according to claim 12 or 13, wherein, for each bracket (30), a parameter representative of the position of the considered bracket is detected, and a displacement of each bracket is operated until a given target value, for said parameter representative of the position of the considered bracket, is reached.

15. The method according to claim 14, wherein the parameter representative of the position of the first bracket is the height position of said first bracket.

16. The method according to claim 15, wherein the parameter representative of the position of the third bracket is the tilt of a segment (32A) of the chassis which extends between the third bracket and at least one of the first and second brackets.

17. The method according to any one of claims 12 to 16, wherein, upon displacement of the brackets (30) aiming at placing one of the first and second horizontal support planes at the predetermined treatment level (14), a horizontal displacement towards a treatment area of the shuttle table (22A, 22B) located on said one of the first and second horizontal support planes is controlled, before said one of the first and second horizontal support planes has reached said predetermined treatment level.
